# EUROPEAN PATENT APPLICATION

(11) **EP 4 485 829 A1**
(43) Date of publication of application: **01.01.2025**
(21) Application number: 23755732.7
(22) Date of filing: 09.02.2023
(51) Int. Cl.: H04L 1/18

(54) **INFORMATION PROCESSING METHOD AND APPARATUS AND READABLE STORAGE MEDIUM**

(30) Priority: 21.02.2022 CN 202210155736
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN)
(74) Representative: Maiwald GmbH
(86) International application number: PCT/CN2023/075176
(87) International publication number: WO 2023/155729

(57) **Abstract**

The present disclosure provides an information processing method, an information processing apparatus and a readable storage medium, which relates to the field of communication technology. The method includes: transmitting, by a network device, first Downlink Control Information DCI to a user equipment to schedule repetitions of a target Transport Block TB; transmitting, by the network device, second DCI to the user equipment, the second DCI is DCI for scheduling an HARQ process where the target TB is located, and indication information in the second DCI or a format of the second DCI is used to indicate the user equipment to determine resources for remaining repetitions of the target TB in accordance with the second DCI; and receiving or transmitting, by the network device, the target TB through the resources for the remaining repetitions determined in accordance with the second DCI.

## Description

### CROSS-REFERENCE TO RELATED APPLICATION

This application claims a priority to the Chinese patent application No. 202210155736.0 filed on February 21, 2022, which is incorporated in its entirety by reference herein.

### TECHNICAL FIELD

The present disclosure relates to the field of communication technology, in particular to an information processing method, an information processing apparatus, and a readable storage medium.

### BACKGROUND

In order to solve problems about coverage, latency and capacity of uplink transmission in a Time Division Duplex (Time Division Duplex, TDD) mode, the non-overlapping sub-band full duplex (non-overlapping sub-band full duplex) technology is to be studied, i.e., frequency domain resources are divided into multiple sub-bands not overlapping each other, and uplink and downlink frequency domain resources are located at different sub-bands, which is called as full duplex for short hereinafter.

After a network is switched from a static/dynamic TDD mode to a full duplex mode, resources configured for a user equipment for repetitions before the switching may be unavailable; or after the network is switched from the static/dynamic TDD mode to the full duplex mode, there may be more abundant uplink/downlink transmission resources. In the related technologies, time/frequency domain transmission resources for the repetitions by the user equipment are configured at once through Downlink Control Information (Downlink Control Information, DCI), so the repetitions may be interrupted, or the abundant uplink/downlink transmission resources can not be utilized.

### SUMMARY

The present disclosure provides an information processing method, an information processing apparatus, and a readable storage medium, so as to address occurrence of transmission interruption caused due to unavailable repetition resources, or improve transmission efficiency and reduce power consumption of a user equipment.

In a first aspect, the present disclosure provides in some embodiments an information processing method, including: transmitting, by a network device, first Downlink Control Information (DCI) to a user equipment to schedule repetitions of a target Transport Block (Transport Block, TB); transmitting, by the network device, second DCI to the user equipment, the second DCI is DCI for scheduling a Hybrid Automatic Repeat Request (Hybrid Automatic Repeat Request, HARQ) process where the target TB is located, and indication information in the second DCI or a format of the second DCI is used to indicate the user equipment to determine resources for remaining repetitions of the target TB in accordance with the second DCI; and receiving or transmitting, by the network device, the target TB through the resources for the remaining repetitions determined in accordance with the second DCI.

In a possible embodiment of the present disclosure, the second DCI includes a first indication field, and the indication information in the second DCI is indicated through the first indication field.

In a possible embodiment of the present disclosure, the second DCI includes a second indication field, and the indication information is indicated through a target state of the second indication field.

In a possible embodiment of the present disclosure, the second indication field includes a field for indicating a Modulation and Coding Scheme (Modulation and Coding Scheme, MCS).

In a possible embodiment of the present disclosure, the second DCI includes a third indication field, and the indication information is indicated through a target bit of the third indication field.

In a possible embodiment of the present disclosure, the format of the second DCI is a DCI format for configuring time domain and frequency domain resources, or a DCI format for configuring frequency domain resources.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (Time Division Duplex, TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, in a case that the second DCI indicates time domain resources and frequency domain resources for a user equipment group, time domain resources and/or frequency domain resources for user equipments in the user equipment group do not overlap each other, or, time domain resources or frequency domain resources for user equipments in the user equipment group completely overlap each other or are the same; or in a case that the second DCI indicates frequency domain resources for a user equipment group, the frequency domain resources for user equipments in the user equipment group completely overlap each other or are the same.

In a possible embodiment of the present disclosure, the information processing apparatus further includes: receiving, by the network device, acknowledgement information transmitted by the user equipment for the second DCI.

In a second aspect, the present disclosure provides in some embodiments an information processing method, including: performing, by a user equipment, repetitions of a target Transport Block (TB) in accordance with first Downlink Control Information (DCI); receiving, by the user equipment, second DCI; determining in accordance with the second DCI, by the user equipment, resources for remaining repetitions of the target TB, based on indication information in the second DCI or a format of the second DCI; and performing, by the user equipment, the remaining repetitions of the target TB in accordance with the resources for the remaining repetitions of the target TB.

In a possible embodiment of the present disclosure, the second DCI includes a first indication field, and the indication information in the second DCI is indicated through the first indication field, the determining in accordance with the second DCI, by the user equipment, the resources for the remaining repetitions of the target TB, based on the indication information in the second DCI includes: in a case that a value indicated by the first indication field is a first preset value, determining, by the user equipment, the resources for the remaining repetitions of the target TB in accordance with the second DCI.

In a possible embodiment of the present disclosure, the second DCI includes a second indication field, and the indication information is indicated through a target state of the second indication field, the determining in accordance with the second DCI, by the user equipment, the resources for the remaining repetitions of the target TB, based on the indication information in the second DCI includes: in a case that the target state of the second indication field in the second DCI indicates a preset state, determining, by the user equipment, the resources for the remaining repetitions of the target TB in accordance with the second DCI.

In a possible embodiment of the present disclosure, the second DCI includes a third indication field, and the indication information is indicated through a target bit of the third indication field, the determining in accordance with the second DCI, by the user equipment, the resources for the remaining repetitions of the target TB, based on the indication information in the second DCI includes: in a case that the target bit of the third indication field in the second DCI indicate a third preset value, determining, by the user equipment, the resources for the remaining repetitions of the target TB in accordance with the second DCI.

In a possible embodiment of the present disclosure, the format of the second DCI is a DCI format for configuring time domain and frequency domain resources, or a DCI format for configuring frequency domain resources, the determining in accordance with the second DCI, by the user equipment, the resources for the remaining repetitions of the target TB, based on the format of the second DCI includes: in a case that the format of the second DCI is the DCI format for configuring time domain and frequency domain resources, or the DCI format for configuring the frequency domain resources, determining, by the user equipment, the resources for the remaining repetitions of the target TB in accordance with the second DCI.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission, after the receiving, by the user equipment, the second DCI from a network device, the information processing method further includes: determining, by the user equipment, the time domain resource corresponding to the resources for transmission in accordance with the slot format indication field, and determining the frequency domain resource corresponding to the resources for transmission in accordance with the frequency domain resource assignment field.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission; after the receiving, by the user equipment, the second DCI from a network device, the information processing method further includes: determining, by the user equipment, the frequency domain resource corresponding to the resources for transmission in accordance with the frequency domain resource assignment field.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission; after the receiving, by the user equipment, the second DCI from a network device, the information processing method further includes: determining, by the user equipment, the time domain resource corresponding to the resources for transmission in accordance with the time domain resource assignment field, and determining the frequency domain resource corresponding to the resources for transmission in accordance with the frequency domain resource assignment field; or determining, by the user equipment, the frequency domain resource corresponding to the resources for transmission in accordance with the frequency domain resource assignment field.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, after the receiving, by the user equipment, the second DCI from the network device, the information processing method further includes: transmitting, by the user equipment, acknowledgement information to the network device for the second DCI.

In a third aspect, the present disclosure provides in some embodiments an information processing apparatus applied to a network device, including a memory, a transceiver and a processor. The memory is configured to store therein a computer program, and the transceiver is configured to transmit and receive data under control of the processor. The processor is configured to read the computer program in the memory to perform following operation: transmitting first Downlink Control Information (DCI) to a user equipment to schedule repetitions of a target Transport Block (TB); transmitting second DCI to the user equipment, where indication information in the second DCI or a format of the second DCI is used to indicate the user equipment to determine resources for remaining repetitions of the target TB in accordance with the second DCI; and receiving or transmitting the target TB through the resources for the remaining repetitions determined in accordance with the second DCI.

In a possible embodiment of the present disclosure, the second DCI includes a first indication field, and the indication information in the second DCI is indicated through the first indication field.

In a possible embodiment of the present disclosure, the second DCI includes a second indication field, and the indication information is indicated through a target state of the second indication field.

In a possible embodiment of the present disclosure, the second indication field includes a field for indicating a Modulation and Coding Scheme (MCS).

In a possible embodiment of the present disclosure, the second DCI includes a third indication field, and the indication information is indicated through a target bit of the third indication field.

In a possible embodiment of the present disclosure, the format of the second DCI is a DCI format for configuring time domain and frequency domain resources, or a DCI format for configuring frequency domain resources.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, in a case that the second DCI indicates time domain resources and frequency domain resources for a user equipment group, time domain resources and/or frequency domain resources for user equipments in the user equipment group do not overlap each other, or, time domain resources or frequency domain resources for user equipments in the user equipment group completely overlap each other or are the same; or n a case that the second DCI indicates frequency domain resources for a user equipment group, the frequency domain resources for user equipments in the user equipment group completely overlap each other or are the same.

In a possible embodiment of the present disclosure, the processor is further configured to read the computer program in the memory to perform following operation: receiving acknowledgement information transmitted by the user equipment for the second DCI.

In a fourth aspect, the present disclosure provides in some embodiments an information processing apparatus applied to a user equipment, including a memory, a transceiver and a processor. The memory is configured to store therein a computer program, and the transceiver is configured to transmit and receive data under control of the processor. The processor is configured to read the computer program in the memory to perform following operation: performing repetitions of a target Transport Block (TB) in accordance with first Downlink Control Information (DCI); receiving second DCI; determining in accordance with the second DCI, resources for remaining repetitions of the target TB, based on indication information in the second DCI or a format of the second DCI; and performing the remaining repetitions of the target TB in accordance with the resources for the remaining repetitions of the target TB.

In a possible embodiment of the present disclosure, the second DCI includes a first indication field, and the indication information in the second DCI is indicated through the first indication field; the processor is further configured to read the computer program in the memory to perform following operation: in a case that a value indicated by the first indication field is a first preset value, determining the resources for the remaining repetitions of the target TB in accordance with the second DCI.

In a possible embodiment of the present disclosure, the second DCI includes a second indication field, and the indication information is indicated through a target state of the second indication field; the processor is further configured to read the computer program in the memory to perform following operation: in a case that the target state of the second indication field in the second DCI indicates a preset state, determining the resources for the remaining repetitions of the target TB in accordance with the second DCI.

In a possible embodiment of the present disclosure, the second DCI includes a third indication field, and the indication information is indicated through a target bit of the third indication field; the processor is further configured to read the computer program in the memory to perform following operation: in a case that the target bit of the third indication field in the second DCI indicate a third preset value, determining the resources for the remaining repetitions of the target TB in accordance with the second DCI.

In a possible embodiment of the present disclosure, the format of the second DCI is a DCI format for configuring time domain and frequency domain resources, or a DCI format for configuring frequency domain resources; the processor is further configured to read the computer program in the memory to perform following operation: in a case that the format of the second DCI is the DCI format for configuring time domain and frequency domain resources, or the DCI format for configuring the frequency domain resources, determining the resources for the remaining repetitions of the target TB in accordance with the second DCI.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission; the processor is further configured to read the computer program in the memory to perform following operation: determining the time domain resource corresponding to the resources for transmission in accordance with the slot format indication field, and determining the frequency domain resource corresponding to the resources for transmission in accordance with the frequency domain resource assignment field.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission; the processor is further configured to read the computer program in the memory to perform following operation: determining the frequency domain resource corresponding to the resources for transmission in accordance with the frequency domain resource assignment field.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission; the processor is further configured to read the computer program in the memory to perform following operation: determining the time domain resource corresponding to the resources for transmission in accordance with the time domain resource assignment field, and determining the frequency domain resource corresponding to the resources for transmission in accordance with the frequency domain resource assignment field; or determining the frequency domain resource corresponding to the resources for transmission in accordance with the frequency domain resource assignment field.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, the processor is further configured to read the computer program in the memory to perform following operation: transmitting acknowledgement information to a network device for the second DCI.

In a fifth aspect, the present disclosure provides in some embodiments an information processing apparatus applied to a network device, including: a first transmission unit, configured to transmit first Downlink Control Information (DCI) to a user equipment to schedule repetitions of a target Transport Block (TB); a second transmission unit, configured to transmit second DCI to the user equipment, where indication information in the second DCI or a format of the second DCI is used to indicate the user equipment to determine resources for remaining repetitions of the target TB in accordance with the second DCI; and a first processing unit, configured to receive or transmit the target TB through the resources for the remaining repetitions determined in accordance with the second DCI.

In a sixth aspect, the present disclosure provides in some embodiments an information processing apparatus applied to a user equipment, including: a first processing unit, configured to perform repetitions of a target Transport Block (TB) in accordance with first Downlink Control Information (DCI); a first reception unit, configured to receive second DCI; a first determination unit, configured to determine in accordance with the second DCI, resources for remaining repetitions of the target TB, based on indication information in the second DCI or a format of the second DCI; and a second processing unit, configured to perform the remaining repetitions of the target TB in accordance with the resources for the remaining repetitions of the target TB.

In a seventh aspect, the present disclosure provides in some embodiments a processor readable storage medium, having a computer program stored thereon. The computer program is executed by a processor so as to implement the above-mentioned information processing method.

According to the embodiments of the present disclosure, in the case that the repetitions of the target TB are scheduled through the first DCI, the network device may transmit the second DCI to the user equipment, so as to indicate, through the indication information in the second DCI or the format of the second DCI, the user equipment to determine the resources for the remaining repetitions of the target TB in accordance with the second DCI. Then, the target TB is received or transmitted in accordance with the resources for the remaining repetitions determined in accordance with the second DCI. It can be seen that, based on the solutions in the embodiments of the present disclosure, the transmission resources for the remaining repetitions can be configured. In this way, the problem of occurrence of transmission interruption caused due to unavailable repetition resources is solved, or, the user equipment is enabled to utilize abundant transmission resources in time or obtain resources which are more advantageous to transmission, thereby improving transmission efficiency and reducing power consumption of the user equipment.

### BRIEF DESCRIPTION OF THE DRAWINGS

Fig. 1 is a first flow chart of an information processing method according to embodiments of the present disclosure;
Fig. 2 is a second flow chart of an information processing method according to embodiments of the present disclosure;
Fig. 3 is a first schematic diagram of an information processing apparatus according to embodiments of the present disclosure;
Fig. 4 is a second schematic diagram of an information processing apparatus according to embodiments of the present disclosure;
Fig. 5 is a third schematic diagram of an information processing apparatus according to embodiments of the present disclosure; and
Fig. 6 is a fourth schematic diagram of an information processing apparatus according to embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Embodiments of the present disclosure provide an information processing method and an information processing apparatus, so as to save resources.

The method and the device are based on the same application concept. Since the principles of solving problems in the method and the device are similar, reference may be made to each other for implementations of the device and the method, the repetition of which is not provided herein.

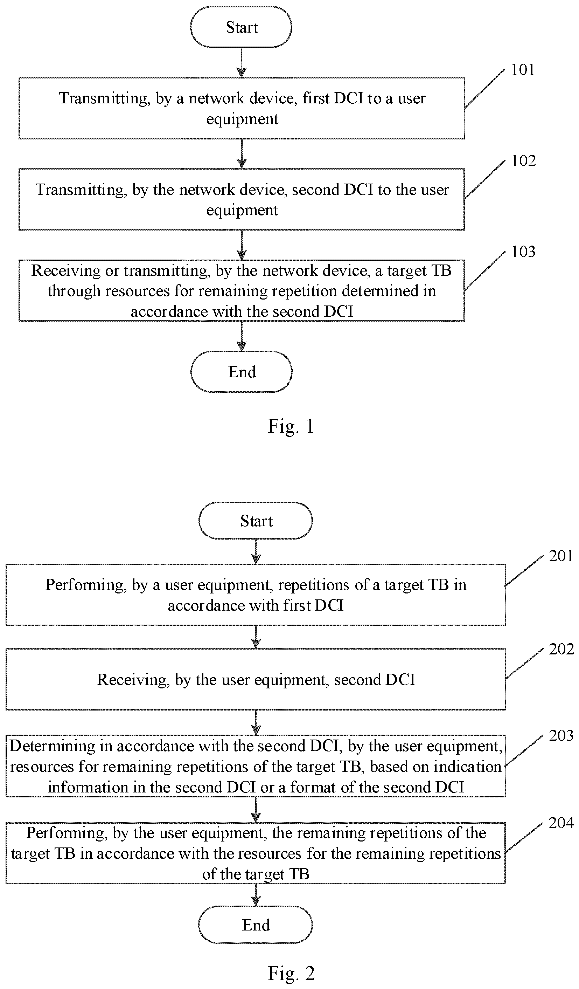

Reference is made to Fig. 1, which is a flow chart of an information processing method according to embodiments of the present disclosure. As shown in Fig. 1, the method includes the following steps.

Step 101 includes: transmitting, by a network device, first DCI to a user equipment to schedule repetitions of a target TB.

The target TB may be any TB. In actual use, a network schedules, through the first DCI, new transmission or HARQ repetition of the target TB, and may configure the quantity of repetitions of the target TB through the first DCI or Radio Resource Control (Radio Resource Control, RRC) signaling. Hence, the first DCI may be DCI which schedules the new transmission or HARQ repetition of the target TB for the first time, and it may be implemented in any existing DCI format.

Step 102 includes: transmitting, by the network device, second DCI to the user equipment.

The second DCI is DCI for scheduling an HARQ process where the target TB is located. The indication information in the second DCI or a format of the second DCI is used to indicate the user equipment to determine resources for remaining repetitions of the target TB in accordance with the second DCI.

In the embodiments of the present disclosure, remaining repetitions refer to repetitions, among the configured quantity of repetitions of the target TB, which have not been performed by the user equipment by a start time when the second DCI becomes effective. In other words, the remaining repetitions are repetitions corresponding to the remaining repetition quantity, and the remaining repetition quantity is quantity of repetitions, among the quantity of repetitions configured by the network, which have not been performed by the user equipment by a time point when the second DCI becomes effective. The quantity of repetitions of the target TB may be configured through the first DCI, the RRC signaling, or any other ways. The start time when the second DCI becomes effective may be indicated through the second DCI, configured through RRC, or determined in accordance with a preset value. The resources for the remaining repetitions refer to resources for performing the remaining repetitions.

In the embodiments of the present disclosure, the network device may indicate, through the indication information in the second DCI, the user equipment to determine the resources for the remaining repetitions of the target TB in accordance with the second DCI.
(1) The second DCI includes a first indication field, and the indication information in the second DCI is indicated through the first indication field.

The second DCI may be implemented in any DCI format defined in the protocol. The first indication field may be a newly-added indication field, e.g., Re-config flag field. In other words, in this mode, the network device indicates, through the first indication field, the user equipment to or not to determine the resources for the remaining repetitions of the target TB in accordance with the second DCI. For example, in a case that a value of the first indication field is 1, the user equipment is indicated to determine the resources for the remaining repetitions of the TB in accordance with the second DCI; otherwise, it may be used for conventional scheduling. In this way, the network device may dynamically update resource configuration for the quantity of remaining repetitions, so as to improve scheduling flexibility.

(2) The second DCI includes a second indication field, and the indication information is indicated through a target state of the second indication field.

The second DCI may be implemented in any DCI format defined in the protocol, and the second indication field may be any existing field. In other words, a target state of the existing field in the DCI is redefined, so as to indicate the user equipment to determine the resources for the remaining repetitions of the target TB in accordance with the second DCI. In the embodiments of the present disclosure, the second indication field is different from the first indication field. The second indication field may be an MCS field.

For example, on the premise that a New Data Indicator (New Data Indicator, NDI) indicates HARQ repetition, an MCS state is defined to indicate the user equipment to determine the resources for the remaining repetitions of the target TB in accordance with the second DCI, so as to continue to complete the remaining repetitions. In this mode, based on an MCS bit state during scheduling of HARQ repetition, dynamical update of resource configuration for the quantity of remaining repetitions by the network device is supported. Although scheduling of any MCS state is not excluded in scheduling of HARQ repetition, usually only the last three or four MCS states (indicating the user equipment not to recalculate a Transport Block Size (Transport Block Size, TBS), calculate the TBS in accordance with a previous piece of DCI scheduling information) are used. Hence, an MCS state in the scheduling of HARQ repetition that is not commonly used may be adopted, which reduces flexibility of repetition scheduling, and it is adopted to indicate whether the current scheduling is used for the quantity of remaining repetitions or HARQ repetition. For example, in a case that the MCS bit state is "00000", "11011" or "111000", it indicates to the user equipment that the second DCI is used for scheduling the remaining repetitions, i.e., the resources for the remaining repetitions of the target TB are determined in accordance with the second DCI, otherwise, the user equipment performs the HARQ repetition.

(3) The second DCI includes a third indication field, and the indication information is indicated through a target bit of the third indication field.

The second DCI may be implemented in any DCI format defined in the protocol, and the third indication field may be any existing field. In other words, a target bit of the existing field in the DCI is redefined, so as to indicate the user equipment to determine the resources for the remaining repetitions of the target TB in accordance with the second DCI. In the embodiments of the present disclosure, the third indication field is different from the first indication field.

For example, an X^{th} bit of a frequency domain resource assignment field or an MCS field may be used to indicate whether the scheduling of the second DCI is used for the quantity of remaining repetitions, i.e., indicate the user equipment to determine the resources for the remaining repetitions of the target TB in accordance with the second DCI.

In the embodiments of the present disclosure, the network device may indicate, through the format of the second DCI, the user equipment to determine the resources for the remaining repetitions of the target TB in accordance with the second DCI.

To be specific, the format of the second DCI is a DCI format for configuring time domain and frequency domain resources, or a DCI format for configuring frequency domain resources. The format of the second DCI may be DCI 2_0, or a newly-defined DCI format.

In a case that the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI. In a case that the format of the second DCI is a newly-defined DCI format, any field in the newly-defined DCI format or the newly-defined DCI format may be used to indicate the user equipment to determine the resources for the remaining repetitions of the target TB in accordance with the second DCI.

In the case that the format of the second DCI is DCI 2_0, and when the user equipment operates in a TDD mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission. Or, when the user equipment operates in a duplex mode, the second DCI does not include any slot format indication field, and the frequency domain resource assignment field is used to indicate a frequency domain resource corresponding to the resources for transmission.

In a case that the second DCI is received by the user equipment, the user equipment performs the transmission corresponding to the quantity of remaining repetitions by using the time/frequency domain resources configured through the second DCI, and other configuration information still adopts configuration corresponding to the first DCI. Otherwise, the user equipment does not update time/frequency domain resource configuration corresponding to the quantity of remaining repetitions.

In a case that the second DCI is in a newly-defined DCI format, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission. For other configuration information, configuration corresponding to the first DCI is reused.

In a possible embodiment of the present disclosure, in a case that the second DCI is in a newly-defined DCI format, the second DCI includes a fourth indication field, and the fourth indication field is used to indicate an HARQ process corresponding to the second DCI. For example, in the DCI format, the second DCI includes an HARQ process number (HARQ process number) field for indicating the corresponding HARQ process scheduled through the second DCI. In a case that there exist uncompleted repetitions for multiple processes, different time domain resources and frequency domain resources may be reconfigured for each process through this field.

In a case that the second DCI is in a newly-defined DCI format, the second DCI may indicate time domain resources and frequency domain resources for a user equipment group (UE group). Time domain resources and/or frequency domain resources for user equipments in the user equipment group do not overlap each other, or, time domain resources or frequency domain resources for user equipments in the user equipment group completely overlap each other or are the same. When the second DCI indicates frequency domain resources for a user equipment group, the frequency domain resources for user equipments in the user equipment group completely overlap each other or are the same. In a case that the frequency domain resources for the user equipments in the user equipment group completely overlap each other or are the same, bit overhead of the DCI can be remarkably reduced.

In a case that the second DCI is in a newly-defined DCI format, the network device may further receive acknowledgement information transmitted by the user equipment for the second DCI. In this way, the following situation can be avoided: the user equipment fails to correctly receive the second DCI and continues performing repetitions on original resources, and the network device considers that the user equipment has correctly received the second DCI and schedules other user equipments on the original resources of the user equipment, so that occurrence of interference between the user equipment and other user equipments is caused.

Step 103 includes: receiving or transmitting, by the network device, the target TB through the resources for the remaining repetitions determined in accordance with the second DCI.

According to the embodiments of the present disclosure, in the case that the repetitions of the target TB are scheduled through the first DCI, the network device may transmit the second DCI to the user equipment, so as to indicate, through the indication information in the second DCI or the format of the second DCI, the user equipment to determine the resources for the remaining repetitions of the target TB in accordance with the second DCI. Then, the target TB is received or transmitted in accordance with the resources for the remaining repetitions determined in accordance with the second DCI. It can be seen that, based on the solutions in the embodiments of the present disclosure, the transmission resources for the remaining repetitions can be configured. In this way, the problem of occurrence of transmission interruption caused due to unavailable repetition resources is solved, or, the user equipment is enabled to utilize abundant transmission resources in time or obtain resources which are more advantageous to transmission, thereby improving transmission efficiency and reducing power consumption of the user equipment.

Reference is made to Fig. 2, which is a flow chart of an information processing method according to embodiments of the present disclosure. As shown in Fig. 2, the method includes the following steps.

Step 201 includes: performing, by a user equipment, repetitions of a target TB in accordance with first DCI.

The target TB may be any TB. In actual use, a network schedules, through the first DCI, new transmission or HARQ repetition of the target TB, and may configure the quantity of repetitions of the target TB through the first DCI or RRC signaling, and the user equipment may receive or transmits the target TB in accordance with the scheduling by a base station. Hence, the first DCI is DCI which schedules the new transmission or HARQ repetition of the target TB for the first time, and it may be implemented in any existing DCI format.

Step 202 includes: receiving, by the user equipment, second DCI.

The second DCI is DCI for scheduling an HARQ process where the target TB is located. The second DCI is received in the case that not all the repetitions of the target TB have been performed. Hence, the second DCI is DCI received by the user equipment again in the repetition procedure of new transmission or HARQ repetition of the target TB scheduled through the first DCI.

Step 203 includes: determining in accordance with the second DCI, by the user equipment, resources for remaining repetitions of the target TB, based on indication information in the second DCI or a format of the second DCI.

In this step, based on the indication information in the second DCI, the user equipment determines the resources for the remaining repetitions of the target TB in accordance with the second DCI.
(1) The second DCI includes a first indication field, and the indication information in the second DCI is indicated through the first indication field.

In a case that a value indicated by the first indication field is a first preset value, the user equipment determines the resources for the remaining repetitions of the target TB in accordance with the second DCI. The first preset value is set according to the practical need.

The second DCI may be implemented in any DCI format defined in the protocol. The first indication field may be a newly-added indication field, e.g., Re-config flag field. In other words, in this mode, the network device indicates, through the first indication field, the user equipment to or not to determine the resources for the remaining repetitions of the target TB in accordance with the second DCI. For example, in a case that a value of the first indication field is 1, the user equipment determines the resources for the remaining repetitions of the TB in accordance with the second DCI; otherwise, it is determined that the second DCI is used for conventional scheduling.

(2) The second DCI includes a second indication field, and the indication information is indicated through a target state of the second indication field.

In a case that the target state of the second indication field in the second DCI indicates a preset state, the user equipment determines the resources for the remaining repetitions of the target TB in accordance with the second DCI.

In other words, a target state of the existing field in the DCI is redefined, so as to indicate the user equipment to determine the resources for the remaining repetitions of the target TB in accordance with the second DCI. The second indication field may be an MCS field. The preset state is set according to the practical need.

For example, in a case that the MCS bit state is "00000", the user equipment may determine that the second DCI is used for scheduling the remaining repetitions, i.e., the resources for the remaining repetitions of the target TB are determined in accordance with the second DCI, otherwise, the user equipment performs the HARQ repetition.

(3) The second DCI includes a third indication field, and the indication information is indicated through a target bit of the third indication field.

In a case that the target bit of the third indication field in the second DCI indicate a third preset value, the user equipment determines the resources for the remaining repetitions of the target TB in accordance with the second DCI. The third preset value is set according to the practical need.

The second DCI may be implemented in any DCI format defined in the protocol, and the third indication field may be any existing field. In other words, a target bit of the existing field in the DCI is redefined, so as to indicate the user equipment to determine the resources for the remaining repetitions of the target TB in accordance with the second DCI.

For example, an X^{th} bit of a frequency domain resource assignment field may be used to indicate whether the scheduling of the second DCI is used for the quantity of remaining repetitions, i.e., indicate the user equipment to determine the resources for the remaining repetitions of the target TB in accordance with the second DCI. In a case that the X^{th} bit is 1, the user equipment determines the resources for the remaining repetitions of the target TB in accordance with the second DCI.

In this step, the user equipment may determine in accordance with the second DCI, the resources for the remaining repetitions of the target TB, based on the format of the second DCI.

To be specific, the format of the second DCI is a DCI format for configuring time domain and frequency domain resources, or a DCI format for configuring frequency domain resources. The format of the second DCI may be DCI 2_0, or a newly-defined DCI format.

In a case that the format of the second DCI is the DCI format for configuring time domain and frequency domain resources, or the DCI format for configuring the frequency domain resources, the user equipment determines the resources for the remaining repetitions of the target TB in accordance with the second DCI.

In other words, in this mode, in a case that the user equipment determines that the received second DCI is in a format of DCI 2_0 or a newly-defined DCI format, the user equipment determines the resources for the remaining repetitions of the target TB in accordance with the second DCI.

The format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI. In a case that the user equipment determines that the format of the received second DCI is DCI 2_0, the user equipment determines the resources for remaining the repetitions of the target TB in accordance with the second DCI.

In a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission. Hence, the user equipment may further determine the time domain resource corresponding to the resources for transmission in accordance with the slot format indication field, and determine the frequency domain resource corresponding to the resources for transmission in accordance with the frequency domain resource assignment field.

In a case that the user equipment operates in a duplex mode, the second DCI does not include any slot format indication field, and the frequency domain resource assignment field is used to indicate a frequency domain resource corresponding to the resources for transmission. Hence, the user equipment may further determine the frequency domain resource corresponding to the resources for transmission in accordance with the frequency domain resource assignment field.

In a case that the second DCI is a newly-defined DCI format, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission. The user equipment determines the time domain resource corresponding to the resources for transmission in accordance with the time domain resource assignment field, and determines the frequency domain resource corresponding to the resources for transmission in accordance with the frequency domain resource assignment field; or the user equipment determines the frequency domain resource corresponding to the resources for transmission in accordance with the frequency domain resource assignment field.

In addition, the second DCI includes a fourth indication field, and the fourth indication field is used to indicate an HARQ process corresponding to the second DCI.

In a possible embodiment of the present disclosure, the user equipment may further transmit acknowledgement information to the network device for the second DCI. In this way, the following situation can be avoided: the user equipment fails to correctly receive the second DCI and continues performing repetitions on original resources, and the network device considers that the user equipment has correctly received the second DCI and schedules other user equipments on the original resources of the user equipment, so that occurrence of interference between the user equipment and other user equipments is caused.

In the above embodiments of the present disclosure, a start time when the second DCI becomes effective is located within a slot where a target time point is located, or a start time when the second DCI becomes effective is located within a k^{th} slot after the slot where the target time point is located; the target time point is a time point when the second DCI is received by the user equipment, and k is an integer greater than 0. In other words, k is timing information indicated in the second DCI, and the start time when the second DCI becomes effective may be configured dynamically. In a case that the second DCI is used for scheduling a Physical Downlink Shared Channel (PDSCH), a value of k is k0 indicated in the second DCI, and in a case that the second DCI is used for scheduling a Physical Uplink Shared Channel (PUSCH), the value of k is k2 indicated in the second DCI.

Step 204 includes: performing, by the user equipment, the remaining repetitions of the target TB in accordance with the resources for the remaining repetitions of the target TB.

The second DCI is DCI for scheduling an HARQ process where the target TB is located.

According to the embodiments of the present disclosure, in the case that the repetitions of the target TB are scheduled through the first DCI, the network device may transmit the second DCI to the user equipment, so as to indicate, through the indication information in the second DCI or the format of the second DCI, the user equipment to determine the resources for the remaining repetitions of the target TB in accordance with the second DCI. Then, the target TB is received or transmitted in accordance with the resources for the remaining repetitions determined in accordance with the second DCI. It can be seen that, based on the solutions in the embodiments of the present disclosure, the transmission resources for the remaining repetitions can be configured. In this way, the problem of occurrence of transmission interruption caused due to unavailable repetition resources is solved, or, the user equipment is enabled to utilize abundant transmission resources in time or obtain resources which are more advantageous to transmission, thereby improving transmission efficiency and reducing power consumption of the user equipment.

The implementation of the information processing method in the embodiments of the present disclosure will be described hereinafter in more details in conjunction with the embodiments.

In an embodiment of the present disclosure, the base station newly adds an indication field on the basis of an existing DCI format, and this indication field is used to indicate the user equipment to determine the resources for remaining repetitions of the target TB and determine whether or not to update the transmission resources for performing the remaining repetitions. The existing DCI format may refer to a DCI format defined in the protocol.

The base station transmits the first DCI to the user equipment, so as to schedule the repetitions of the target TB. The base station transmits the second DCI to the user equipment. To be specific, on the basis of existing fields in the existing DCI format, the base station newly adds an indication field for carrying the indication information, so as to indicate the user equipment whether or not to update the transmission resources for performing the remaining repetitions. For example, the newly-added field is Repetition-Reconfig flag (Repetition-Reconfig flag) field. The user equipment determines, in accordance with this field, whether the second DCI is used for scheduling the quantity of remaining repetitions. For example, in a case that the field indicates "1", it means that the second DCI is used to schedule the quantity of remaining repetitions, and in a case that the field indicates "0", it means that the second DCI is used for the currently existing scheduling, e.g., scheduling of the HARQ repetition or new TB.

In an embodiment of the present disclosure, on the basis of an existing DCI format (DCI 2_0), the base station newly adds a frequency domain resource assignment field, and the frequency domain resource assignment field is used to indicate the user equipment whether or not to update the transmission resources for performing the remaining repetition.

The base station transmits the first DCI to the user equipment, for scheduling the repetitions of the target TB. The base station transmits the second DCI to the user equipment. To be specific, the base station adds a frequency domain resource assignment field in the existing DCI 2_0 format, and dynamically configures time/frequency domain resources for the user equipment through DCI 2_0. If the second DCI is received by the user equipment, the UE performs the transmission of the quantity of remaining repetitions through the time/frequency domain resources configured through the second DCI, and the other configuration information still adopts configuration corresponding to the DCI for the initial transmission or HARQ repetition of the repeatedly transmitted TB. Otherwise, the user equipment still performs transmission in accordance with the scheduling of the initial transmission or HARQ repetition of the repeatedly transmitted TB.

In a possible embodiment of the present disclosure, the frequency domain resource assignment field is added in DCI 2_0, so as to schedule the quantity of remaining repetitions and configure the corresponding frequency domain resources. In this way, it is able to reduce a DCI overhead, and improve the transmission reliability.

In a possible embodiment of the present disclosure, fields and functions of DCI 2_0 are determined in accordance with a duplex state of the user equipment. In other words, in a case that the user equipment is in the TDD mode, DCI 2_0 is existing DCI 2_0, i.e., it includes a slot format indication field for updating uplink/downlink ratio and updating the time domain resources. In a case that the user equipment is in the duplex mode, DCI 2_0 does not include any slot format indication field, but it includes the frequency domain resource assignment field for updating the frequency domain resources.

In an embodiment of the present disclosure, on the basis of an existing DCI format, a certain state of an existing field in the DCI format, or a certain bit of the existing field, is re-interpreted, so as to indicate the user equipment to determine the resources for remaining repetitions of the target TB in accordance with the second DCI.

A certain state of a certain field in the existing DCI may be defined so as to indicate that the scheduling through the current DCI (the second DCI) is used for the quantity of remaining repetitions. For example, on the premise that the NDI indicates the HARQ repetition, an MCS state of the MCS field is defined so as to indicate the user equipment whether or not the scheduling through the current DCI is used for the quantity of remaining repetitions.

In this mode, through an MCS bit state during the scheduling of the HARQ repetition, the base station is supported to dynamically update a resource configuration for the quantity of remaining repetitions. Although the scheduling of any MCS state is not excluded in the scheduling of the HARQ repetition, usually only the last three or four MCS states (indicating the user equipment not to recalculate a TBS, calculate the TBS in accordance with a previous piece of DCI scheduling information) are used. Hence, an MCS state in the scheduling of the HARQ repetition (e.g., for an MCS index having highest spectral efficiency, there are not so many scenarios, in which the highest spectral efficiency is configured, in the case of configuring repetition), which is not commonly used, is adopted, so as to indicate whether the current scheduling is used for the quantity of remaining repetitions or HARQ repetition.

For example, in a case that an MCS table configured by the network for the user equipment does not support a modulation order of 8, an MCS bit state "111000" (an MCS index is 28) is used to indicate that the current DCI scheduling is used for the quantity of remaining repetitions; otherwise, the current DCI is used for currently existing scheduling, e.g., scheduling of the HARQ repetition or a new TB. In a case that the MCS table configured by the network for the user equipment supports a modulation order of 8, an MCS bit state "11011" (an MCS index is 27) is used to indicate that the current DCI scheduling is used for the quantity of remaining repetitions; otherwise, the current DCI is used for currently existing scheduling, e.g., the scheduling of HARQ repetition or a new TB.

For example, an MCS bit state "00000" indicates to the user equipment that the current DCI is used for scheduling the remaining repetitions; otherwise, the current DCI is used for a scheduling type existing in the protocol, e.g., the scheduling of HARQ repetition or a new TB.

Or, a certain bit of a certain field in the existing DCI is defined so as to indicate whether the scheduling through the current DCI (the second DCI) is used for the quantity of remaining repetitions. For example, an X^{th} bit of the frequency domain resource assignment field is used to indicate whether the scheduling through the current DCI is used for the quantity of remaining repetitions, where X is a positive integer. In a case that the X^{th} bit indicates "1", it means that the current DCI is used for scheduling the quantity of remaining repetitions, and in a case that the X^{th} bit indicates "0", it means that the current DCI is used for currently existing scheduling, e.g., the scheduling of the HARQ repetition or the scheduling of a new TB. In a case that the existing frequency domain resource assignment field includes surplus bits, these surplus bits may be used as an indication field, so as to dynamically schedule the quantity of remaining repetitions without increasing a DCI overhead.

In an embodiment of the present disclosure, a new DCI format may be defined so as to schedule the quantity of remaining repetitions. The DCI format includes a time domain resource assignment field and/or a frequency domain resource assignment field, so as to indicate a time/frequency resource configuration for the quantity of remaining repetitions. For other configuration information, configuration corresponding to a PDCCH for scheduling the repetitions is reused. The user equipment updates the time/frequency domain resources for the quantity of remaining repetitions in accordance with the received DCI.

The user equipment may start to utilize the resource configuration in the current DCI at a slot where the current DCI (the second DCI) is received. For example, in a case that the user equipment receives the DCI within slot n, the user equipment may enable the use of the resource configuration in the DCI within slot n. Or, the user equipment may enable the use of the DCI after a certain time interval from a certain time point when the DCI is received. For example, in a case that the user equipment receives the DCI within slot n, the user equipment starts to utilize the resource configuration in the DCI within slot n+K.

In a possible embodiment of the present disclosure, K is a value predefined in the protocol. Alternatively, indication information about K is included in the DCI format, to dynamically configure a time point when the DCI becomes effective.

In a possible embodiment of the present disclosure, the DCI format includes an HARQ process number field for indicating a corresponding HARQ process scheduled through the DCI. In a case that there exist uncompleted repetitions for multiple processes of the user equipment, different time domain resources and frequency domain resources may be reconfigured for each process through the field.

In a possible embodiment of the present disclosure, upon the receipt of the DCI, the user equipment transmits acknowledgement information to the base station. In this way, the following situation can be avoided: the user equipment fails to correctly receive this DCI and continues performing repetitions on original resources, the network device considers that the user equipment has correctly received this DCI and schedules other user equipments on the original resources of the user equipment, so that occurrence of interference between the user equipment and other user equipments is caused. For example, upon the correct receipt of the current DCI, the user equipment transmits 1-bit acknowledgement (ACK) information through a PUCCH. The 1-bit ACK information and feedback information for PDSCH reception/Semi-Persistent Scheduling (SPS) PDSCH release may utilize an HARQ-ACK codebook (codebook) in a multiplex manner. A position of the 1-bit ACK information in the HARQ-ACK codebook may be determined in accordance with a position of the DCI relative to the PUCCH, or it may be predetermined as a most/least significant bit in the HARQ-ACK codebook.

Based on the above, according to the schemes in the embodiments of the present disclosure, in a case where only positions of the time/frequency domain resources are changed while sizes of the reconfigured frequency domain resources are not changed, the base station may configure any available resources for the user equipment, avoiding a situation where the base station can not configure resources for the user equipment as resources after switching are unavailable; and if resources are unavailable after the switching, the base station may reconfigure the resources. In this way, the network scheduling complexity is reduced. In a case where sizes of the reconfigured frequency domain resources are changed and/or the time/frequency domain resources are changed, the network scheduling complexity can be reduced for the network device, and meanwhile the user equipment can utilize the abundant uplink resources (including both the time domain resources and the frequency domain resources) in time, thereby reducing uplink transmission latency for the user equipment, which is especially suitable for a situation where the quantity of repetitions is large.

The technical solutions in the embodiments of the present disclosure may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2-dimension MIMO, 2D-MIMO), 3-dimension MIMO (3-dimension MIMO, 3D-MIMO), full dimension MIMO (full dimension MIMO, FD-MIMO), or massive MIMO (massive-MIMO), or may be diversity transmission, or precoding transmission, or beamforming transmission, etc.

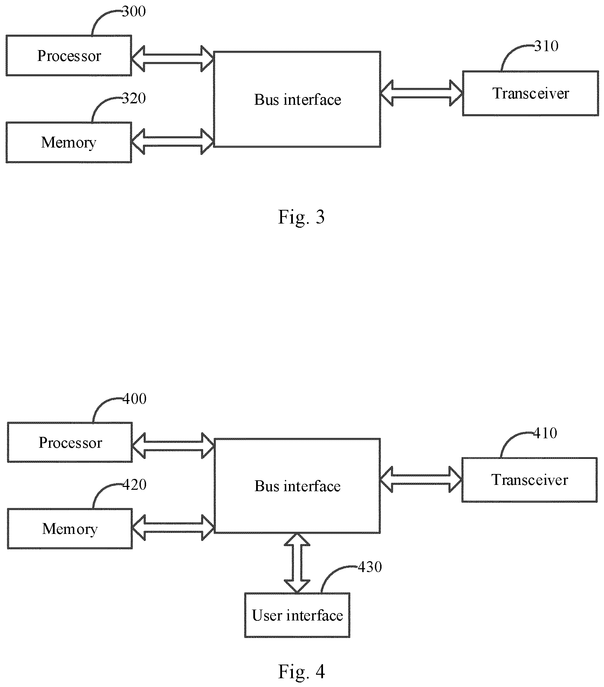

As shown in Fig. 3, the present disclosure provides in some embodiments an information processing apparatus applied to a network device, including:
a processor 300 configured to read a computer program in a memory 320 to perform following operation: transmitting first Downlink Control Information (DCI) to a user equipment to schedule repetitions of a target Transport Block (TB); transmitting second DCI to the user equipment, where indication information in the second DCI or a format of the second DCI is used to indicate the user equipment to determine resources for remaining repetitions of the target TB in accordance with the second DCI; and receiving or transmitting the target TB through the resources for the remaining repetitions determined in accordance with the second DCI; and
a transceiver 310 configured to receive and transmit data under control of the processor 300.

In FIG. 3, a bus architecture may include any quantity of interconnected buses and bridges. Various circuits including one or more processors represented by the processor 300 and a memory represented by the memory 320 are linked. The bus architecture may further link various other circuits together, such as a periphery component, a voltage stabilizer and a power management circuit, which are known in the art and are not further described herein. A bus interface provides an interface. The transceiver 310 may be multiple elements, i.e., including a transmitter and a receiver, providing a unit for communicating with various other devices on transmission media. The processor 300 is in charge of managing the bus architecture and common processes. The memory 320 may store data used by the processor 300 in performing operations.

The processor 310 may be a central processing unit (Central Processing Unit, CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor 300 is in charge of managing the bus architecture and common processes. The memory 320 may store data used by the processor 300 in performing operations.

In a possible embodiment of the present disclosure, the second DCI includes a first indication field, and the indication information in the second DCI is indicated through the first indication field.

In a possible embodiment of the present disclosure, the second DCI includes a second indication field, and the indication information is indicated through a target state of the second indication field.

In a possible embodiment of the present disclosure, the second indication field includes a field for indicating a Modulation and Coding Scheme (MCS).

In a possible embodiment of the present disclosure, the second DCI includes a third indication field, and the indication information is indicated through a target bit of the third indication field.

In a possible embodiment of the present disclosure, the format of the second DCI is a DCI format for configuring time domain and frequency domain resources, or a DCI format for configuring frequency domain resources.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, in a case that the second DCI indicates time domain resources and frequency domain resources for a user equipment group, time domain resources and/or frequency domain resources for user equipments in the user equipment group do not overlap each other, or, time domain resources or frequency domain resources for user equipments in the user equipment group completely overlap each other or are the same; or in a case that the second DCI indicates frequency domain resources for a user equipment group, the frequency domain resources for user equipments in the user equipment group completely overlap each other or are the same.

In a possible embodiment of the present disclosure, the processor 300 is further configured to read the computer program in the memory to perform following operation: receiving acknowledgement information transmitted by the user equipment for the second DCI.

It should be noted that the apparatus according to the embodiments of the present disclosure can realize all the method steps achieved by the network device, and the same technical effects can be realized. The same parts of the present embodiments as the method embodiments, and the beneficial effects, are not repeated herein.

As shown in Fig. 4, the present disclosure further provides in some embodiments an information processing apparatus applied to a user equipment, including:
a processor 400 configured to read a computer program in a memory 420 to perform following operation: performing repetitions of a target Transport Block (TB) in accordance with first Downlink Control Information (DCI); receiving second DCI; determining in accordance with the second DCI, resources for remaining repetitions of the target TB, based on indication information in the second DCI or a format of the second DCI; and performing the remaining repetitions of the target TB in accordance with the resources for the remaining repetitions of the target TB, where the second DCI is DCI for scheduling an HARQ process where the target TB is located; and
a transceiver 410 configured to receive and transmit data under control of the processor 400.

In FIG. 4, a bus architecture may include any quantity of interconnected buses and bridges. Various circuits including one or more processors represented by the processor 400 and a memory represented by the memory 420 are linked. The bus architecture may further link various other circuits together, such as a periphery component, a voltage stabilizer and a power management circuit, which are known in the art and are not further described herein. A bus interface provides an interface. The transceiver 410 may be multiple elements, i.e., including a transmitter and a receiver, providing a unit for communicating with various other devices on transmission media. For different user equipments, the user interface 430 may be an interface capable of connecting externally and internally with the required equipment. The connected equipment includes but not limited to a keypad, a display, a speaker, a microphone, a joystick, etc.

The processor 400 is in charge of managing the bus architecture and common processes. The memory 420 may store data used by the processor 400 in performing operations.

The processor 400 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor is configured to execute any of the methods in the embodiments of the present disclosure according to obtained executable instructions by calling the computer program stored in the memory. The processor and the memory may be physically arranged separately.

In a possible embodiment of the present disclosure, the second DCI includes a first indication field, and the indication information in the second DCI is indicated through the first indication field; the processor 400 is further configured to read the computer program in the memory to perform following operation: in a case that a value indicated by the first indication field is a first preset value, determining the resources for the remaining repetitions of the target TB in accordance with the second DCI.

In a possible embodiment of the present disclosure, the second DCI includes a second indication field, and the indication information is indicated through a target state of the second indication field; the processor 400 is further configured to read the computer program in the memory to perform following operation: in a case that the target state of the second indication field in the second DCI indicates a preset state, determining the resources for the remaining repetitions of the target TB in accordance with the second DCI.

In a possible embodiment of the present disclosure, the second DCI includes a third indication field, and the indication information is indicated through a target bit of the third indication field; the processor 400 is further configured to read the computer program in the memory to perform following operation: in a case that the target bit of the third indication field in the second DCI indicate a third preset value, determining the resources for the remaining repetitions of the target TB in accordance with the second DCI.

In a possible embodiment of the present disclosure, the format of the second DCI is a DCI format for configuring time domain and frequency domain resources, or a DCI format for configuring frequency domain resources; the processor 400 is further configured to read the computer program in the memory to perform following operation: in a case that the format of the second DCI is the DCI format for configuring time domain and frequency domain resources, or the DCI format for configuring the frequency domain resources, determining the resources for the remaining repetitions of the target TB in accordance with the second DCI.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission; the processor 400 is further configured to read the computer program in the memory to perform following operation: determining the time domain resource corresponding to the resources for transmission in accordance with the slot format indication field, and determining the frequency domain resource corresponding to the resources for transmission in accordance with the frequency domain resource assignment field.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission; the processor 400 is further configured to read the computer program in the memory to perform following operation: determining the frequency domain resource corresponding to the resources for transmission in accordance with the frequency domain resource assignment field.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission; the processor 400 is further configured to read the computer program in the memory to perform following operation: determining the time domain resource corresponding to the resources for transmission in accordance with the time domain resource assignment field, and determining the frequency domain resource corresponding to the resources for transmission in accordance with the frequency domain resource assignment field; or determining the frequency domain resource corresponding to the resources for transmission in accordance with the frequency domain resource assignment field.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, the processor 400 is further configured to read the computer program in the memory to perform following operation: transmitting acknowledgement information to a network device for the second DCI.

It should be noted that the apparatus according to the embodiments of the present disclosure can realize all the method steps achieved by the user equipment, and the same technical effects can be realized. The same parts of the present embodiments as the method embodiments, and the beneficial effects, are not repeated herein.

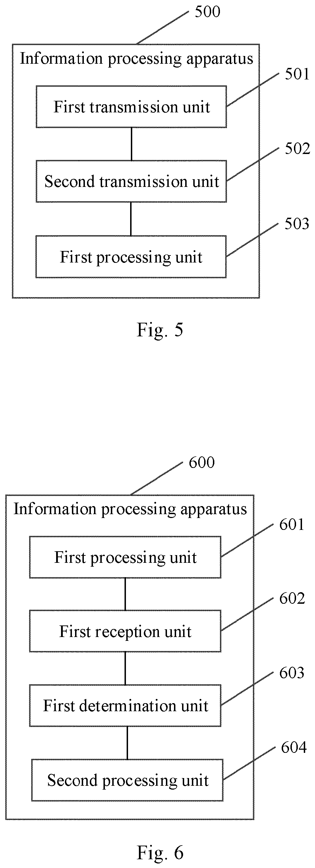

As shown in Fig. 5, the present disclosure further provides in some embodiments an information processing apparatus 500 applied to a network device, which includes: a first transmission unit 501, configured to transmit first Downlink Control Information (DCI) to a user equipment to schedule repetitions of a target Transport Block (TB); a second transmission unit 502, configured to transmit second DCI to the user equipment, where the second DCI is DCI for scheduling an HARQ process where the target TB is located, and indication information in the second DCI or a format of the second DCI is used to indicate the user equipment to determine resources for remaining repetitions of the target TB in accordance with the second DCI; and a first processing unit 503, configured to receive or transmit the target TB through the resources for the remaining repetitions determined in accordance with the second DCI.

In a possible embodiment of the present disclosure, the second DCI includes a first indication field, and the indication information in the second DCI is indicated through the first indication field.

In a possible embodiment of the present disclosure, the second DCI includes a second indication field, and the indication information is indicated through a target state of the second indication field.

In a possible embodiment of the present disclosure, the second indication field includes a field for indicating a Modulation and Coding Scheme (MCS).

In a possible embodiment of the present disclosure, the second DCI includes a third indication field, and the indication information is indicated through a target bit of the third indication field.

In a possible embodiment of the present disclosure, the format of the second DCI is a DCI format for configuring time domain and frequency domain resources, or a DCI format for configuring frequency domain resources.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission.

In a possible embodiment of the present disclosure, the second DCI includes a fourth indication field, and the fourth indication field is used to indicate a Hybrid Automatic Repeat Request (HARQ) process corresponding to the second DCI.

In a possible embodiment of the present disclosure, in a case that the second DCI indicates time domain resources and frequency domain resources for a user equipment group, time domain resources and/or frequency domain resources for user equipments in the user equipment group do not overlap each other, or, time domain resources or frequency domain resources for user equipments in the user equipment group completely overlap each other or are the same; or in a case that the second DCI indicates frequency domain resources for a user equipment group, the frequency domain resources for user equipments in the user equipment group completely overlap each other or are the same.

In a possible embodiment of the present disclosure, the information processing apparatus further includes: a first reception unit, configured to receive acknowledgement information transmitted by the user equipment for the second DCI.

It should be noted that the apparatus according to the embodiments of the present disclosure can realize all the method steps achieved by the network device, and the same technical effects can be realized. The same parts of the present embodiments as the method embodiments, and the beneficial effects, are not repeated herein.

As shown in Fig. 6, the present disclosure further provides in some embodiments an information processing device applied to a user equipment, which includes: a first processing unit 601, configured to perform repetitions of a target Transport Block (TB) in accordance with first Downlink Control Information (DCI); a first reception unit 602, configured to receive second DCI; a first determination unit 603, configured to determine in accordance with the second DCI, resources for remaining repetitions of the target TB, based on indication information in the second DCI or a format of the second DCI; and a second processing unit 604, configured to perform the remaining repetitions of the target TB in accordance with the resources for the remaining repetitions of the target TB. The second DCI is DCI for scheduling an HARQ process where the target TB is located.

In a possible embodiment of the present disclosure, the second DCI includes a first indication field, and the indication information in the second DCI is indicated through the first indication field; the first determination unit is configured to: in a case that a value indicated by the first indication field is a first preset value, determine the resources for the remaining repetitions of the target TB in accordance with the second DCI.

In a possible embodiment of the present disclosure, the second DCI includes a second indication field, and the indication information is indicated through a target state of the second indication field; the first determination unit is configured to: in a case that the target state of the second indication field in the second DCI indicates a preset state, determine the resources for the remaining repetitions of the target TB in accordance with the second DCI.

In a possible embodiment of the present disclosure, the second DCI includes a third indication field, and the indication information is indicated through a target bit of the third indication field; the first determination unit is configured to: in a case that the target bit of the third indication field in the second DCI indicate a third preset value, determine the resources for the remaining repetitions of the target TB in accordance with the second DCI.

In a possible embodiment of the present disclosure, the format of the second DCI is a DCI format for configuring time domain and frequency domain resources, or a DCI format for configuring frequency domain resources; the first determination unit is configured to: in a case that the format of the second DCI is the DCI format for configuring time domain and frequency domain resources, or the DCI format for configuring the frequency domain resources, determine the resources for the remaining repetitions of the target TB in accordance with the second DCI.

In a possible embodiment of the present disclosure, the format of the second DCI is DCI 2_0, the second DCI includes a frequency domain resource assignment field; and through the format of the second DCI being DCI 2_0, the user equipment is indicated to determine the resources for the remaining repetitions of the target TB in accordance with the second DCI.

In a possible embodiment of the present disclosure, in a case that the user equipment operates in a Time Division Duplex (TDD) mode, the second DCI further includes a slot format indication field, the slot format indication field is used to indicate a time domain resource corresponding to the resources for transmission, and the frequency domain resource assignment field is used to indicate a frequency domain resource corresponding to the resources for transmission; the information processing apparatus further includes: a second determination unit configured to: determine the time domain resource corresponding to the resources for transmission in accordance with the slot format indication field, and determine the frequency domain resource corresponding to the resources for transmission in accordance with the frequency domain resource assignment field.

In a possible embodiment of the present disclosure, in a case that the user equipment operates in a duplex mode, the second DCI does not include any slot format indication field, and the frequency domain resource assignment field is used to indicate a frequency domain resource corresponding to the resources for transmission; the information processing apparatus further includes a third determination unit configured to: determine the frequency domain resource corresponding to the resources for transmission in accordance with the frequency domain resource assignment field.

In a possible embodiment of the present disclosure, the second DCI includes a time domain resource assignment field and a frequency domain resource assignment field, or the second DCI includes a frequency domain resource assignment field; the time domain resource assignment field is used to indicate a time domain resource corresponding to the resources for transmission, and the frequency domain resource assignment field is used to indicate a frequency domain resource corresponding to the resources for transmission; the information processing apparatus further includes: a fourth determination unit configured to determine the time domain resource corresponding to the resources for transmission in accordance with the time domain resource assignment field, and determine the frequency domain resource corresponding to the resources for transmission in accordance with the frequency domain resource assignment field; or determine the frequency domain resource corresponding to the resources for transmission in accordance with the frequency domain resource assignment field.

In a possible embodiment of the present disclosure, the second DCI includes a fourth indication field, and the fourth indication field is used to indicate a Hybrid Automatic Repeat Request (HARQ) process corresponding to the second DCI. The information processing apparatus further includes: a fifth determination unit configured to determine a time domain resource for an HARQ process corresponding to the second DCI in accordance with the fourth indication field and the time domain resource assignment field; and/or determine a frequency domain resource for the HARQ process corresponding to the second DCI in accordance with the fourth indication field and the frequency domain resource assignment field.

In a possible embodiment of the present disclosure, the information processing apparatus further includes: a first transmission unit configured to transmit acknowledgement information to the network device for the second DCI.

It should be noted that the apparatus according to the embodiments of the present disclosure can realize all the method steps achieved by the user equipment, and the same technical effects can be realized. The same parts of the present embodiments as the method embodiments, and the beneficial effects, are not repeated herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the readable storage medium stores a program, and the program, when being execute by a processor, performs various processes in the embodiments of the above-mentioned information processing method, and same technical effects can be achieved, the repetition of which is not provided herein. The readable storage medium may be any available medium or data storage device that the processor may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

It should be noted that the terms such as "having" and "including" or any other variants thereof, are intended to cover a non-exclusive inclusion, such that a process, method, article, or apparatus that includes a list of elements not only include those elements but may also include other elements that are not expressly listed or that are inherent to such process, method, article, or apparatus. Without more constraints, an element defined by the phrase "including a ..." does not preclude the existence of additional same elements in the process, method, article, or apparatus that includes the element.

From the above description of the embodiments, it will be clear to a person skilled in the art that the method of the above embodiments may be implemented by means of software plus common hardware platform as needed, or by means of hardware. With such an understanding, the essence the technical solutions of the present disclosure or the part contributing to the related technologies may be embodied in the form of a software product, and the computer software product is stored in a storage medium (e.g. ROM/RAM, magnetic disk, optical disk) including instructions to enable a terminal (which may be a cell phone, a computer, a server, an air conditioner or a network device) to perform the methods described in the various embodiments of the present disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure are described in the above with reference to the drawings, and the present disclosure is not limited to the above specific implementations. The above specific implementations are illustrative rather than restrictive. Various forms can be made by those of ordinary skill in the art under the inspiration of the present disclosure, without departing from the purpose of the present disclosure and the protection scope of the claims, all of which fall within the protection of the present disclosure

## Claims

1. An information processing method, comprising:
transmitting, by a network device, first Downlink Control Information (DCI) to a user equipment to schedule repetitions of a target Transport Block (TB);
transmitting, by the network device, second DCI to the user equipment, wherein indication information in the second DCI or a format of the second DCI is used to indicate the user equipment to determine resources for remaining repetitions of the target TB in accordance with the second DCI; and
receiving or transmitting, by the network device, the target TB through the resources for the remaining repetitions determined in accordance with the second DCI.

2. The information processing method according to claim 1, wherein the second DCI comprises a first indication field, and the indication information in the second DCI is indicated through the first indication field.

3. The information processing method according to claim 1, wherein the second DCI comprises a second indication field, and the indication information is indicated through a target state of the second indication field.

4. The information processing method according to claim 3, wherein the second indication field comprises a field for indicating a Modulation and Coding Scheme (MCS).

5. The information processing method according to claim 1, wherein the second DCI comprises a third indication field, and the indication information is indicated through a target bit of the third indication field.

6. The information processing method according to claim 1, wherein the format of the second DCI is a DCI format for configuring time domain and frequency domain resources, or a DCI format for configuring frequency domain resources.

7. The information processing method according to claim 6, wherein the format of the second DCI is DCI 2_0, the second DCI comprises a frequency domain resource assignment field; and through the format of the second DCI being DCI 2_0, the user equipment is indicated to determine the resources for the remaining repetitions of the target TB in accordance with the second DCI.

8. The information processing method according to claim 7, wherein in a case that the user equipment operates in a Time Division Duplex (TDD) mode, the second DCI further comprises a slot format indication field, the slot format indication field is used to indicate a time domain resource corresponding to the resources for transmission, and the frequency domain resource assignment field is used to indicate a frequency domain resource corresponding to the resources for transmission.

9. The information processing method according to claim 7, wherein in a case that the user equipment operates in a duplex mode, the second DCI does not comprise any slot format indication field, and the frequency domain resource assignment field is used to indicate a frequency domain resource corresponding to the resources for transmission.

10. The information processing method according to claim 6, wherein the second DCI comprises a time domain resource assignment field and a frequency domain resource assignment field, or the second DCI comprises a frequency domain resource assignment field;
wherein the time domain resource assignment field is used to indicate a time domain resource corresponding to the resources for transmission, and the frequency domain resource assignment field is used to indicate a frequency domain resource corresponding to the resources for transmission.

11. The information processing method according to claim 10, wherein the second DCI comprises a fourth indication field, and the fourth indication field is used to indicate a Hybrid Automatic Repeat Request (HARQ) process corresponding to the second DCI.

12. The information processing method according to claim 10, wherein in a case that the second DCI indicates time domain resources and frequency domain resources for a user equipment group, time domain resources and/or frequency domain resources for user equipments in the user equipment group do not overlap each other, or, time domain resources or frequency domain resources for user equipments in the user equipment group completely overlap each other or are the same; or
in a case that the second DCI indicates frequency domain resources for a user equipment group, the frequency domain resources for user equipments in the user equipment group completely overlap each other or are the same.

13. The information processing method according to claim 9, further comprising: receiving, by the network device, acknowledgement information transmitted by the user equipment for the second DCI.

14. An information processing method, comprising:
performing, by a user equipment, repetitions of a target Transport Block (TB) in accordance with first Downlink Control Information (DCI);
receiving, by the user equipment, second DCI;
determining in accordance with the second DCI, by the user equipment, resources for remaining repetitions of the target TB, based on indication information in the second DCI or a format of the second DCI; and
performing, by the user equipment, the remaining repetitions of the target TB in accordance with the resources for the remaining repetitions of the target TB.

15. The information processing method according to claim 14, wherein the second DCI comprises a first indication field, and the indication information in the second DCI is indicated through the first indication field;
wherein the determining in accordance with the second DCI, by the user equipment, the resources for the remaining repetitions of the target TB, based on the indication information in the second DCI comprises: in a case that a value indicated by the first indication field is a first preset value, determining, by the user equipment, the resources for the remaining repetitions of the target TB in accordance with the second DCI.

16. The information processing method according to claim 14, wherein the second DCI comprises a second indication field, and the indication information is indicated through a target state of the second indication field;
wherein the determining in accordance with the second DCI, by the user equipment, the resources for the remaining repetitions of the target TB, based on the indication information in the second DCI comprises: in a case that the target state of the second indication field in the second DCI indicates a preset state, determining, by the user equipment, the resources for the remaining repetitions of the target TB in accordance with the second DCI.

17. The information processing method according to claim 14, wherein the second DCI comprises a third indication field, and the indication information is indicated through a target bit of the third indication field;
wherein the determining in accordance with the second DCI, by the user equipment, the resources for the remaining repetitions of the target TB, based on the indication information in the second DCI comprises: in a case that the target bit of the third indication field in the second DCI indicate a third preset value, determining, by the user equipment, the resources for the remaining repetitions of the target TB in accordance with the second DCI.

18. The information processing method according to claim 14, wherein the format of the second DCI is a DCI format for configuring time domain and frequency domain resources, or a DCI format for configuring frequency domain resources;
wherein the determining in accordance with the second DCI, by the user equipment, the resources for the remaining repetitions of the target TB, based on the format of the second DCI comprises: in a case that the format of the second DCI is the DCI format for configuring time domain and frequency domain resources, or the DCI format for configuring the frequency domain resources, determining, by the user equipment, the resources for the remaining repetitions of the target TB in accordance with the second DCI.

19. The information processing method according to claim 18, wherein the format of the second DCI is DCI 2_0, the second DCI comprises a frequency domain resource assignment field; and through the format of the second DCI being DCI 2_0, the user equipment is indicated to determine the resources for the remaining repetitions of the target TB in accordance with the second DCI.

20. The information processing method according to claim 19, wherein in a case that the user equipment operates in a Time Division Duplex (TDD) mode, the second DCI further comprises a slot format indication field, the slot format indication field is used to indicate a time domain resource corresponding to the resources for transmission, and the frequency domain resource assignment field is used to indicate a frequency domain resource corresponding to the resources for transmission;
wherein after the receiving, by the user equipment, the second DCI from a network device, the information processing method further comprises: determining, by the user equipment, the time domain resource corresponding to the resources for transmission in accordance with the slot format indication field, and determining the frequency domain resource corresponding to the resources for transmission in accordance with the frequency domain resource assignment field.

21. The information processing method according to claim 19, wherein in a case that the user equipment operates in a duplex mode, the second DCI does not comprise any slot format indication field, and the frequency domain resource assignment field is used to indicate a frequency domain resource corresponding to the resources for transmission;
wherein after the receiving, by the user equipment, the second DCI from a network device, the information processing method further comprises: determining, by the user equipment, the frequency domain resource corresponding to the resources for transmission in accordance with the frequency domain resource assignment field.

22. The information processing method according to claim 18, wherein the second DCI comprises a time domain resource assignment field and a frequency domain resource assignment field, or the second DCI comprises a frequency domain resource assignment field;
wherein the time domain resource assignment field is used to indicate a time domain resource corresponding to the resources for transmission, and the frequency domain resource assignment field is used to indicate a frequency domain resource corresponding to the resources for transmission;
wherein after the receiving, by the user equipment, the second DCI from a network device, the information processing method further comprises:
determining, by the user equipment, the time domain resource corresponding to the resources for transmission in accordance with the time domain resource assignment field, and determining the frequency domain resource corresponding to the resources for transmission in accordance with the frequency domain resource assignment field; or
determining, by the user equipment, the frequency domain resource corresponding to the resources for transmission in accordance with the frequency domain resource assignment field.

23. The information processing method according to claim 22, wherein the second DCI comprises a fourth indication field, and the fourth indication field is used to indicate a Hybrid Automatic Repeat Request (HARQ) process corresponding to the second DCI.

24. The information processing method according to any one of claims 21 to 23, wherein after the receiving, by the user equipment, the second DCI from the network device, the information processing method further comprises: transmitting, by the user equipment, acknowledgement information to the network device for the second DCI.

25. An information processing apparatus, applied to a network device, comprising a memory, a transceiver and a processor,
wherein the memory is configured to store therein a computer program, and the transceiver is configured to transmit and receive data under control of the processor,
wherein the processor is configured to read the computer program in the memory to perform following operation:
transmitting first Downlink Control Information (DCI) to a user equipment to schedule repetitions of a target Transport Block (TB);
transmitting second DCI to the user equipment, wherein indication information in the second DCI or a format of the second DCI is used to indicate the user equipment to determine resources for remaining repetitions of the target TB in accordance with the second DCI; and
receiving or transmitting the target TB through the resources for the remaining repetitions determined in accordance with the second DCI.

26. The information processing apparatus according to claim 25, wherein the second DCI comprises a first indication field, and the indication information in the second DCI is indicated through the first indication field.

27. The information processing apparatus according to claim 25, wherein the second DCI comprises a second indication field, and the indication information is indicated through a target state of the second indication field.

28. The information processing apparatus according to claim 27, wherein the second indication field comprises a field for indicating a Modulation and Coding Scheme (MCS).

29. The information processing apparatus according to claim 25, wherein the second DCI comprises a third indication field, and the indication information is indicated through a target bit of the third indication field.

30. The information processing apparatus according to claim 25, wherein the format of the second DCI is a DCI format for configuring time domain and frequency domain resources, or a DCI format for configuring frequency domain resources.

31. The information processing apparatus according to claim 30, wherein the format of the second DCI is DCI 2_0, the second DCI comprises a frequency domain resource assignment field; and through the format of the second DCI being DCI 2_0, the user equipment is indicated to determine the resources for the remaining repetitions of the target TB in accordance with the second DCI.

32. The information processing apparatus according to claim 31, wherein in a case that the user equipment operates in a Time Division Duplex (TDD) mode, the second DCI further comprises a slot format indication field, the slot format indication field is used to indicate a time domain resource corresponding to the resources for transmission, and the frequency domain resource assignment field is used to indicate a frequency domain resource corresponding to the resources for transmission.

33. The information processing apparatus according to claim 31, wherein in a case that the user equipment operates in a duplex mode, the second DCI does not comprise any slot format indication field, and the frequency domain resource assignment field is used to indicate a frequency domain resource corresponding to the resources for transmission.

34. The information processing apparatus according to claim 30, wherein the second DCI comprises a time domain resource assignment field and a frequency domain resource assignment field, or the second DCI comprises a frequency domain resource assignment field;
wherein the time domain resource assignment field is used to indicate a time domain resource corresponding to the resources for transmission, and the frequency domain resource assignment field is used to indicate a frequency domain resource corresponding to the resources for transmission.

35. The information processing apparatus according to claim 34, wherein the second DCI comprises a fourth indication field, and the fourth indication field is used to indicate a Hybrid Automatic Repeat Request (HARQ) process corresponding to the second DCI.

36. The information processing apparatus according to claim 34, wherein in a case that the second DCI indicates time domain resources and frequency domain resources for a user equipment group, time domain resources and/or frequency domain resources for user equipments in the user equipment group do not overlap each other, or, time domain resources or frequency domain resources for user equipments in the user equipment group completely overlap each other or are the same; or
in a case that the second DCI indicates frequency domain resources for a user equipment group, the frequency domain resources for user equipments in the user equipment group completely overlap each other or are the same.

37. The information processing device according to claim 33, wherein the processor is further configured to read the computer program in the memory to perform following operation: receiving acknowledgement information transmitted by the user equipment for the second DCI.

38. An information processing apparatus, applied to a user equipment, comprising a memory, a transceiver and a processor,
wherein the memory is configured to store therein a computer program, and the transceiver is configured to transmit and receive data under control of the processor,
wherein the processor is configured to read the computer program in the memory to perform following operation:
performing repetitions of a target Transport Block (TB) in accordance with first Downlink Control Information (DCI);
receiving second DCI;
determining in accordance with the second DCI, resources for remaining repetitions of the target TB, based on indication information in the second DCI or a format of the second DCI; and
performing the remaining repetitions of the target TB in accordance with the resources for the remaining repetitions of the target TB.

39. The information processing apparatus according to claim 38, wherein the second DCI comprises a first indication field, and the indication information in the second DCI is indicated through the first indication field; wherein the processor is further configured to read the computer program in the memory to perform following operation: in a case that a value indicated by the first indication field is a first preset value, determining the resources for the remaining repetitions of the target TB in accordance with the second DCI.

40. The information processing apparatus according to claim 38, wherein the second DCI comprises a second indication field, and the indication information is indicated through a target state of the second indication field; wherein the processor is further configured to read the computer program in the memory to perform following operation: in a case that the target state of the second indication field in the second DCI indicates a preset state, determining the resources for the remaining repetitions of the target TB in accordance with the second DCI.

41. The information processing apparatus according to claim 38, wherein the second DCI comprises a third indication field, and the indication information is indicated through a target bit of the third indication field; wherein the processor is further configured to read the computer program in the memory to perform following operation: in a case that the target bit of the third indication field in the second DCI indicate a third preset value, determining the resources for the remaining repetitions of the target TB in accordance with the second DCI.

42. The information processing apparatus according to claim 38, wherein the format of the second DCI is a DCI format for configuring time domain and frequency domain resources, or a DCI format for configuring frequency domain resources; wherein the processor is further configured to read the computer program in the memory to perform following operation: in a case that the format of the second DCI is the DCI format for configuring time domain and frequency domain resources, or the DCI format for configuring the frequency domain resources, determining the resources for the remaining repetitions of the target TB in accordance with the second DCI.

43. The information processing apparatus according to claim 42, wherein the format of the second DCI is DCI 2_0, the second DCI comprises a frequency domain resource assignment field; and through the format of the second DCI being DCI 2_0, the user equipment is indicated to determine the resources for the remaining repetitions of the target TB in accordance with the second DCI.

44. The information processing apparatus according to claim 43, wherein in a case that the user equipment operates in a Time Division Duplex (TDD) mode, the second DCI further comprises a slot format indication field, the slot format indication field is used to indicate a time domain resource corresponding to the resources for transmission, and the frequency domain resource assignment field is used to indicate a frequency domain resource corresponding to the resources for transmission;
wherein the processor is further configured to read the computer program in the memory to perform following operation: determining the time domain resource corresponding to the resources for transmission in accordance with the slot format indication field, and determining the frequency domain resource corresponding to the resources for transmission in accordance with the frequency domain resource assignment field.

45. The information processing apparatus according to claim 43, wherein in a case that the user equipment operates in a duplex mode, the second DCI does not comprise any slot format indication field, and the frequency domain resource assignment field is used to indicate a frequency domain resource corresponding to the resources for transmission;
wherein the processor is further configured to read the computer program in the memory to perform following operation: determining the frequency domain resource corresponding to the resources for transmission in accordance with the frequency domain resource assignment field.

46. The information processing apparatus according to claim 42, wherein the second DCI comprises a time domain resource assignment field and a frequency domain resource assignment field, or the second DCI comprises a frequency domain resource assignment field;
wherein the time domain resource assignment field is used to indicate a time domain resource corresponding to the resources for transmission, and the frequency domain resource assignment field is used to indicate a frequency domain resource corresponding to the resources for transmission;
wherein the processor is further configured to read the computer program in the memory to perform following operation:
determining the time domain resource corresponding to the resources for transmission in accordance with the time domain resource assignment field, and determining the frequency domain resource corresponding to the resources for transmission in accordance with the frequency domain resource assignment field; or
determining the frequency domain resource corresponding to the resources for transmission in accordance with the frequency domain resource assignment field.

47. The information processing apparatus according to claim 46, wherein the second DCI comprises a fourth indication field, and the fourth indication field is used to indicate a Hybrid Automatic Repeat Request (HARQ) process corresponding to the second DCI.

48. The information processing apparatus according to any one of claims 45 to 47, wherein the processor is further configured to read the computer program in the memory to perform following operation: transmitting acknowledgement information to a network device for the second DCI.

49. An information processing apparatus, applied to a network device, comprising:
a first transmission unit, configured to transmit first Downlink Control Information (DCI) to a user equipment to schedule repetitions of a target Transport Block (TB);
a second transmission unit, configured to transmit second DCI to the user equipment, wherein indication information in the second DCI or a format of the second DCI is used to indicate the user equipment to determine resources for remaining repetitions of the target TB in accordance with the second DCI; and
a first processing unit, configured to receive or transmit the target TB through the resources for the remaining repetitions determined in accordance with the second DCI.

50. An information processing apparatus, applied to a user equipment, comprising:
a first processing unit, configured to perform repetitions of a target Transport Block (TB) in accordance with first Downlink Control Information (DCI);
a first reception unit, configured to receive second DCI;
a first determination unit, configured to determine in accordance with the second DCI, resources for remaining repetitions of the target TB, based on indication information in the second DCI or a format of the second DCI; and
a second processing unit, configured to perform the remaining repetitions of the target TB in accordance with the resources for the remaining repetitions of the target TB.

51. A processor readable storage medium, having a computer program stored thereon, wherein the computer program is executed by a processor so as to implement the information processing method according to any one of claims 1 to 24.
